# EUROPÄISCHE PATENTSCHRIFT

(11) **EP 1 541 635 B1**
(45) Veröffentlichungstag und Bekanntmachung des Hinweises auf die Patenterteilung: **07.03.2007**
(21) Anmeldenummer: 03028390.7
(22) Anmeldetag: 11.12.2003
(51) Int. Cl.: C08L 95/00

(54) **Schalldämpfende Zusammensetzung**
Sound-deadening composition
Composition acoustique résistive

(43) Veröffentlichungstag der Anmeldung: 15.06.2005
(73) Patentinhaber: Ampack AG, 9401 Rorschacherberg (CH)
(72) Erfinder: Kastien, Heinz, 8049 Zürich (CH)
(74) Vertreter: Schaad, Balass, Menzl & Partner AG

(56) Entgegenhaltungen:
- EP-A- 0 617 098
- EP-A- 0 686 672
- EP-A- 0 808 877

## Beschreibung

Die Erfindung betrifft ein Verfahren zum flächigen Auftragen einerschalldämpfendenZusammensetzung enthaltend Bitumen, einen anorganischen Füllstoff und Aluminiumhydroxid als flammhemmendes Additiv auf eine Metallkonstruction, wie Eisenbahnwagen und Lastwagen, insbesondere auf Lastwagenchassis und -kabinen.

Schalldämpfende Zusammensetzungen für Metallkonstruktionen müssen einer grossen Anzahl von Anforderungen genügen. Sie müssen mit vernünftigem Aufwand und ohne Brandgefahr applizierbar sein. Ausserdem dürfen sie weder bei Umgebungstemperatur noch bei erhöhter Temperatur korrosiv oder giftig sein oder eine Brandquelle darstellen. Vorzugsweise sind solche Zusammensetzungen flammhemmend oder unbrennbar.

Schalldämpfende Zusammensetzungen auf Bitumenbasis sind beispielsweise aus EP 0 686 672 A1 bekannt. Sie liegen als 40 bis 80 % Dispersion vor. Aus ökologischen Gründen wird heute nur noch Wasser als Dispergiermittel verwendet. Gegenüber organischen Lösungsmitteln bedeutet dies einen höheren Trocknungsaufwand mit den entsprechenden wirtschaftlichen Nachteilen.

Anstelle schalldämpfender Zusammensetzungen können auch Folien auf Bitumenbasis eingesetzt werden.

Aufgabe der vorliegenden Erfindung ist es, eine Zusammensetzung mit schalldämpfenden Eigenschaften bereitzustellen, die den oben aufgeführten Anforderungen genügt und mit niedrigem Aufwand appliziert werden kann.

Die Aufgabe wird durch ein Verfahren mit den Merkmalen von Anspruch 1 gelöst. Weitere bevorzugte Ausführungsformen bilden Gegenstand der abhängigen Ansprüche, auf die hier Bezug genommen wird.

Die Zusammensetzung weist ausgezeichnete schalldämpfende Eigenschaften auf. Ausserdem ist sie mit vernünftigem Aufwand und ohne Brandgefahr applizierbar. Sie ist weder bei Umgebungstemperatur noch bei erhöhter Temperatur korrosiv oder giftig. Da die Zusammensetzung nach der Applikation keine Trocknung erfordert, entfällt ein Applikationsschritt, was zeitsparend und entsprechend wirtschaftlich ist.

Die Zusammensetzung liegt bei Raumtemperatur in fester Form vor. Die Gesamtmenge des in der Zusammensetzung enthaltenen Dispergiermittels beträgt weniger als 3 Gew.% bezogen auf die gesamte Zusammensetzung. Vor dem Auftragen wird sie derart erwärmt, dass sie für die Applikation die geeignete Viskosität besitzt. Letzteres kann mittels Spritzen, Giessen oder Tauchen erfolgen. Die Viskosität der für die Applikation erwärmten Zubereitung ermöglicht auch von komplizierten Metallkonstruktionen ein vollständiges Überziehen. Nach dem Auftragen kühlt die Zusammensetzung zu einer zusammenhängenden rissfreien Beschichtung ab. Ein Trocknungsschritt entfällt.

Die bei Raumtemperatur feste Zusammensetzung ist gut lager- und transportierbar sowie brandsicher.

In einer bevorzugten Ausführungsform ist die Zusammensetzung wasser- und lösungsmittelfrei, was zu sehr schnellen Erstarrungszeiten führt.

Mit Bitumen wird ein schwerflüssiges aus Rohöl gewonnenes Gemisch bezeichnet, dessen viskoelastisches Verhalten temperaturabhängig ist. In der Zusammensetzung können praktisch alle Bitumentypen eingesetzt werden. Je nach Anwendungsgebiet, wie Eisenbahnwagen, Lastwagen und Personenwagen und den damit verbundenen Anforderungen wird der Fachmann den geeigneten Bitumentyp einsetzen. Letzterer kann er anhand von Vorversuchen ermitteln. Mögliche Beispiele sind Normalbitumen, Hochvakuumbitumen und Oxidbitumen.

Bei der Wahl des Bitumentyps spielt die Erweichungstemperatur eine grosse Rolle. Je niedriger der Erweichungspunkt des eingesetzten Bitumens ist, desto tiefer kann die Verarbeitungstemperatur angesetzt und desto schneller kann es verarbeitet werden, beziehungsweise die Zusammensetzung appliziert werden. Andererseits bestimmt der Erweichungspunkt die Schalldämpfung und die Temperaturstabilität. Je höher der Erweichungspunkt ist, desto geringer ist die Schalldämpfung und desto höher ist die Temperaturstabilität. Bevorzugt werden Bitumina mit einem Erweichungspunkt von 60° bis 120°C verwendet, besonders bevorzugt von 60°C bis 100°C.

Je nach Anwendungsgebiet kann ein Teil des Bitumens durch ein synthetisches Harz ersetzt werden. In solchen Fällen kann die erfindungsgemässe Zusammensetzung bis zu 40 Gewichtsprozent eines synthetischen Harzes enthalten. Vorzugsweise ist dabei die Menge des Bitumens und des synthetischen Harzes zusammen kleiner als 30 Gew.% bezogen auf die gesamte Zusammensetzung. Geeignete synthetische Harze sind beispielsweise Kohlenwasserstoffharze, Cumaronharze, Indenharze, Polyolefine und Polyacrylate.

Der Anteil der anorganischen Füllstoffe beträgt vorzugsweise mindestens 30 Gew.% bezogen auf die gesamte Zusammensetzung. Geeignete Füllstoffe sind ausgewählt aus der Gruppe von Cristobalith, Bariumsulfat, Talk, Glimmer, Schwerspat und Chlorit. Die Füllstoffe dürfen bei erhöhter Temperatur keine giftigen oder korrosiven Stoffe abspalten. Bevorzugt werden Füllstoffe eingesetzt, die bei erhöhten Temperaturen gasförmige, nicht brennbare Stoffe freisetzten. Beispiele sind Siliciumdioxid, Calciumcarbonat oder Calciummagnesiumcarbonat.

Die Füllstoffe können auch flammhemmende Additive umfassen, die bei erhöhten Temperaturen einen gasförmigen, nicht brennbaren Stoff freisetzen. Solche Stoffe wirken bei erhöhten Temperaturen als Flammhemmer. Dies sind unter anderem Aluminiumhydroxid, daß zwingend anwesend ist, und Siliciumdioxid, die beide einen hohen Anteil, beispielsweise 25 %, an chemisch gebundenem Wasser enthalten. Weitere geeignete flammhemmende Additive sind Molekularsiebe, Silicagel, Melamin, Phosphate, Polyphosphate, Carbonate und Bicarbonate. Die oben erwähnten flammhemmenden Additive geben bei erhöhter Temperatur Wasserdampf, Ammoniak oder Kohlendioxid ab oder bilden flammhemmende Oxide.

Durch Hilfsstoffe kann beispielsweise das Absetzverhalten der Füllstoffe, die Haftung auf den Metalloberflächen und das Fliessverhalten der erfindungsgemässen Zusammensetzung in dünnen Schichten beeinflusst werden. Beispiele dafür sind Schichtsilicate und Polyurethane.

In einer besonders bevorzugten Ausführungsform enthält die erfindungsgemässe Zusammensetzung 30 bis 50 Gew.% eines Bitumens, 30 bis 50 Gew.% Füllstoffe, 5 bis 10 Gew.% eines flammhemmenden Additivs, wie beispielsweise Aluminiumhydroxyd, und 5 bis 10 Gew.% Hilfsstoffe.

Die Applikation der Zusammensetzung erfolgt durch Spritzen, Giessen oder Tauchen. Hierzu wird die Zusammensetzung mindestens auf den Erweichungspunkt des Bitumens, vorzugsweise 30° bis 40°C über diese Temperatur hinaus, das heisst auf 130° bis 180°C, vorzugsweise auf 130° bis 150°C, erwärmt. Beheizbare Spritzgeräte werden für die Applikation bevorzugt. Die applizierte Schichtdicke richtet sich nach der Dicke der Metallunterlage, zum Beispiel des Blechs. Im allgemeinen appliziert man die Zusammensetzung in einer Schichtdicke, die der doppelten Dicke des Bleches entspricht. Auf der Metallunterlage erstarrt die Zusammensetzung sofort. Nach ca. fünf Minuten sind die beschichteten Gegenstände transportierbar.

Die nachfolgenden Beispiele veranschaulichen die Erfindung, ohne sie jedoch einzuschränken.

| **Beispiel** | **1** | **2** |
|---|---|---|
| Bitumen | 30 | 45 |
| Synthetisches Harz | 15 | 10 |
| Füllstoffe | 45 | 35 |
| Flammhemmendes Additiv (Aluminium-hydroxid) | 5 | 5 |
| Hilfsstoffe | 5 | 5 |
| Erweichungspunkt | 120°C | 60°C |
| Verarbeitungstemperatur | 180°C | 130°C |
| Dichte | 1780 kg/m³ | 1400 kg/m³ |
| Lossfakor bei 2mm | 0.080 | 0.074 |
| Lossfakor bei 4mm | 0.150 | 0.142 |

## Patentansprüche

1. Verfahren zum flächigen Auftragen einer schalldämpfenden Zusammensetzung enthaltend Bitumen, einen anorganischen Füllstoff und Aluminiumhydroxid als flammhemmendes Additiv auf eine Metallkonstruktion, **dadurch gekennzeichnet, dass** die Zusammensetzung eine Gesamtmenge an Wasser und Lösungsmittel von weniger als 3 Gew.% aufweist und oberhalb des Erweichungspunktes des Bitumens flächig aufgetragen wird.

2. Verfahren nach Anspruch 1, **dadurch gekennzeichnet, dass** die Zusammensetzung mittels Spritzen aufgetragen wird.

3. Verfahren nach einem der vorhergehenden Ansprüche, **dadurch gekennzeichnet, dass** die Zusammensetzung zum Auftragen auf eine Temperatur erwärmt wird, die 30°C bis 40°C über dem Erweichungspunkt des Bitumens liegt.

4. Verfahren nach einem der vorhergehenden Ansprüche, **dadurch gekennzeichnet, dass** die Zusammensetzung auf eine Temperatur von 130°C bis 180°C erwärmt wird.

5. Verfahren nach einem der vorhergehenden Ansprüche, **dadurch gekennzeichnet, dass** die Zusammensetzung in einer Schichtdicke aufgetragen wird, die im wesentlichen der doppelten Dicke der Metallkonstruktion entspricht.

6. Verfahren nach einem der vorhergehenden Ansprüche, **dadurch gekennzeichnet, dass** die anorganischen Füllstoffe ausgewählt sind aus der Gruppe von Cristobalit, Bariumsulfat, Talk, Glimmer, Schwerspat und Chlorit.

7. Verfahren nach einem der vorhergehenden Ansprüche, **dadurch gekennzeichnet, dass** die Zusammensetzung wasser- und lösungsmittelfrei ist.

8. Verfahren nach einem der vorhergehenden Ansprüche, **dadurch gekennzeichnet, dass** die Zusammensetzung 30 bis 50 Gew.% Bitumen, 30 bis 50 Gew.% Füllstoffe, 5 bis 10 Gew.% Aluminiumhydroxid und 5 bis 10 Gew.% weitere Hilfsstoffe enthält.

9. Verfahren nach einem der vorhergehenden Ansprüche, **dadurch gekennzeichnet, dass** die Zusammensetzung bis zu 20 Gew.% eines synthetischen Harzes enthält und die Menge des Bitumens und des synthetischen Harzes zusammen kleiner als 30 Gew.% der gesamten Zusammensetzung ist.

10. Verfahren nach einem der vorhergehenden Ansprüche, **dadurch gekennzeichnet, dass** die Metallkonstruktion ein Maschinen- oder Transportmittel ist.

11. Verfahren nach einem der vorhergehenden Ansprüche, **dadurch gekennzeichnet, dass** die Metallkonstruktion eine Eisenbahnwagen- oder Lastwagenkabine ist.

## Claims

1. Method for the extensive application of a sound-deadening composition containing bitumen, an inorganic filler and aluminium hydroxide as a flame-retardant additive to a metal construction, **characterized in that** the composition has a total amount of less than 3% by weight of water and solvent and is applied extensively at above the softening point of the bitumen.

2. Method according to Claim 1, **characterized in that** the composition is applied by means of spraying.

3. Method according to either of the preceding claims, **characterized in that**, for application, the composition is heated to a temperature which is 30°C to 40°C above the softening point of the bitumen.

4. Method according to any of the preceding claims, **characterized in that** the composition is heated to a temperature of 130°C to 180°C.

5. Method according to any of the preceding claims, **characterized in that** the composition is applied in a layer thickness which substantially corresponds to twice the thickness of the metal construction.

6. Method according to any of the preceding claims, **characterized in that** the inorganic fillers are selected from the group consisting of cristobalite, barium sulphate, talc, mica, barite and chlorite.

7. Method according to any of the preceding claims, **characterized in that** the composition is water- and solvent-free.

8. Method according to any of the preceding claims, **characterized in that** the composition contains 30 to 50% by weight of bitumen, 30 to 50% by weight of fillers, 5 to 10% by weight of aluminium hydroxide and 5 to 10% by weight of further auxiliaries.

9. Method according to any of the preceding claims, **characterized in that** the composition contains up to 20% by weight of a synthetic resin and the amount of bitumen and of the synthetic resin together is less than 30% by weight of the total composition.

10. Method according to any of the preceding claims, **characterized in that** the metal construction is a machine means or means of transport.

11. Method according to any of the preceding claims, **characterized in that** the metal construction is a railway carriage cabin or lorry cabin.

## Revendications

1. Procédé pour appliquer sur une surface d'une structure métallique une composition acoustiquement isolante qui contient du bitume, une charge minérale et de l'hydroxyde d'aluminium comme additif d'ignifugation, **caractérisé en ce que** la composition présente une teneur totale en eau et en solvant inférieure à 3 % en poids et est appliquée sur la surface à une température supérieure au point d'amollissement du bitume.

2. Procédé selon la revendication 1, **caractérisé en ce que** la composition est appliquée par projection.

3. Procédé selon l'une des revendications précédentes, **caractérisé en ce que** pour être appliquée, la composition est chauffée à une température de 30°C à 40°C plus élevée que le point d'amollissement du bitume.

4. Procédé selon l'une des revendications précédentes, **caractérisé en ce que** la composition est chauffée à une température de 130°C à 180°C.

5. Procédé selon l'une des revendications précédentes, **caractérisé en ce que** la composition est appliquée en une couche d'une épaisseur qui correspond sensiblement au double de l'épaisseur de la structure métallique.

6. Procédé selon l'une des revendications précédentes, **caractérisé en ce que** les charges minérales sont sélectionnées dans l'ensemble constitué de la cristobalite, du sulfate de baryum, du talc, du mica, de la baryte sulfatée et de la chlorite.

7. Procédé selon l'une des revendications précédentes, **caractérisé en ce que** la composition est exempte d'eau et de solvant.

8. Procédé selon l'une des revendications précédentes, **caractérisé en ce que** la composition contient de 30 à 50 % en poids de bitume, de 30 à 50 % en poids de charges, de 5 à 10 % en poids d'hydroxyde d'aluminium et de 5 à 10 % en poids d'autres substances auxiliaires.

9. Procédé selon l'une des revendications précédentes, **caractérisé en ce que** la composition contient jusque 20 % en poids d'une résine synthétique et **en ce que** la quantité du bitume et celle de la résine synthétique représentent ensemble moins de 30 % en poids de la totalité de la composition.

10. Procédé selon l'une des revendications précédentes, **caractérisé en ce que** la structure métallique est une machine ou un moyen de transport.

11. Procédé selon l'une des revendications précédentes, **caractérisé en ce que** la structure métallique est un wagon de chemin de fer ou une cabine de camion.
